# EUROPÄISCHE PATENTSCHRIFT

(11) **EP 2 118 534 B1**
(45) Veröffentlichungstag und Bekanntmachung des Hinweises auf die Patenterteilung: **12.04.2017**
(21) Anmeldenummer: 07846825.3
(22) Anmeldetag: 26.11.2007
(51) Int. Cl.: F16J 9/26, C23C 4/06

(54) **KOLBENRING MIT MEHRLAGENSCHICHTVERBAND UND VERFAHREN ZU DESSEN HERSTELLUNG**
PISTON RING WITH A MULTILAYER ASSEMBLY, AND A METHOD FOR THE PRODUCTION THEREOF
SEGMENT DE PISTON AVEC UNE ADHÉSION INTERLAMINAIRE MULTICOUCHE ET PROCÉDÉ DE FABRICATION DE CELUI-CI

(30) Priorität: 09.01.2007 DE 102007001377
(43) Veröffentlichungstag der Anmeldung: 18.11.2009
(60) Teilanmeldung: 17151924.2
(73) Patentinhaber: Federal-Mogul Burscheid GmbH, 51399 Burscheid (DE)
(72) Erfinder: SCHMIDT, Peter, 53819 Neunkirchen Seelscheid (DE); MATZ, Marc-Manuel, 86316 Friedberg (DE); RIEDL, Johann, 86316 Friedberg (DE)
(74) Vertreter: Becker Kurig Straus
(86) Internationale Anmeldenummer: PCT/EP2007/010259
(87) Internationale Veröffentlichungsnummer: WO 2008/083793

(56) Entgegenhaltungen:
- EP-A- 0 764 801
- WO-A-98/19084
- DE-A1- 19 931 829
- GB-A- 633 457
- US-A- 4 592 964
- US-A- 4 612 256

## Beschreibung

Die vorliegende Erfindung betrifft einen Kolbenring und ein Verfahren zu dessen Herstellung, insbesondere einen Großkolbenring mit einer Mehrlagenbeschichtung für eine Verbrennungskraftmaschine.

Bei Kolbenringen wie beispielsweise denen von Hubkolben-Verbrennungskraftmaschinen sind zwei an sich gegensätzliche Anforderungen zu erfüllen. Zum einen muss eine hohe Verschleißfestigkeit gegeben sein, da anderenfalls, d.h. bei dünner werdendem Kolbenring, die Gasleckage und der Ölverbrauch zunehmen können sowie die Leistung des Motors sich verschlechtert. Durch einen sich abreibenden Kolbenring wird der Spalt zwischen Zylinderwand und Kolbenring immer größer, so dass Verbrennungsgase leichter an dem Ring vorbei austreten können (so genanntes Blow-By), was die Effizienz des Motors verringert. Durch einen vergrößerten Spalt wird weiterhin der im Verbrennungsraum zurückbleibende nicht abgestreifte Ölfilm dicker, so dass mehr Öl pro Zeiteinheit verloren gehen kann, also der Ölverbrauch erhöht wird.

Um möglichst optimale Motoreigenschaften zu erreichen, also den bestmöglichen Kompromiss zwischen maximaler Dichtwirkung und geringen Reibungsverlusten zu erreichen, muss daher die Dimension des Spaltes zwischen Kolbenring(en) und Zylinderwand möglichst genau eingehalten werden. Dies würde allerdings bei Herstellung und Zusammenbau des Motors aufwendige und teure Verfahrensschritte erfordern, da es ansonsten immer zu einem gewissen Grad an unvermeidlichen Toleranzen kommt. Eine eventuell geringfügig zu kleine Spaltdimension wird daher gewöhnlich in Kauf genommen, wobei dem Kolbenring weiter gestattet wird, durch Abrieb im Betrieb die optimale Dicke zu erreichen. Dabei reibt sich idealerweise die Lauffläche des Kolbenrings soweit ab, bis der optimale Spaltdurchmesser erreicht ist. Dieser Vorgang wird auch als Einlaufen bezeichnet. Einerseits ist also ein möglichst verschleißfestes Material gewünscht, um zu erreichen, dass sich im regulären Betrieb der Kolbenring möglichst wenig abnutzt und der Spalt sich kaum vergrößert. Um gute Einlaufeigenschaften zu erreichen, muss aber zumindest ein Teil der Lauffläche im Verhältnis leichter abgerieben werden können, damit sich ein eventuell (z.B. aufgrund unvermeidlicher Bauteiltoleranzen) zu kleiner Spalt zwischen Kolbenring und Zylinderwand während dem Einlaufbetrieb möglichst rasch auf die richtige Dimension erweitern kann.

Prinzipiell werden Kolbenringe daher mit Beschichtungen versehen, welche die gewünschten Eigenschaften hervorbringen sollen. Dies ist naturgemäß einfacher zu handhaben und billiger, als den gesamten Kolbenring aus einem möglicherweise teuren Material mit den gewünschten Eigenschaften herzustellen. Bei solchen Beschichtungen kommt eine weitere Anforderung hinzu. Die Beschichtung muss neben der Bereitstellung der nötigen Eigenschaften auch so beschaffen sein, dass sie sich nicht von dem Kolbenring ablöst, also gute Adhäsion mit dem zugrunde liegenden Material aufweist. Sofern die Beschichtung aus mehreren unterschiedlichen Schichten besteht, ist ferner ein guter Zusammenhalt zwischen den Schichten erforderlich, also eine gute Kohäsion. Anderenfalls drohen Rissbildung oder Ablösung der Schichten, was für den Motor gefährlich sein kann.

Beschichtungen auf den Laufflächen von Kolbenringen müssen in dem mit der Zylinderwand in Berührung stehenden Oberflächenbereich verschleißfest sein. Darüber hinaus soll ihr Eigenverschleiß in der Einlaufphase für eine genügende Anpassung an die Gegenfläche ausreichen. Außerdem sollen diese Schichten eine hohe Ausbruchsicherheit haben und auch nach langen Laufzeiten kein oder nur ein geringes Ermüdungsverhalten zeigen. Verschleißschutzschichten werden beispielsweise aus Hartchrom hergestellt. Die DE 199 31 829 A1 beschreibt eine galvanische Hartchromschicht für einen Kolbenring. Weitere Materialien für Verschleißschutzschichten sind Chrom mit Aluminiumoxidkeramik (z.B. CKS^{®} der Firma Federal-Mogul) oder Chrom mit Mikrodiamant (z.B. GDC^{®} der Firma Federal-Mogul).

Auf CKS^{®}-Verschleißschutzschichten aufgebrachte Einlaufschichten basieren beispielsweise auf Molybdän, das mittels Drahtflammspritzens auf die Verschleißschutzschicht aufgebracht wird. Die Verschleißschutzschicht wird hierbei zuvor durch einen Strahlprozess aktiviert.

Weiterhin kann auf einer CKS^{®}-Verschleißschutzschicht durch thermisches Spritzen eine Einlaufschicht aus einer AlCuFe-Legierung aufgebracht werden. Hierzu muss auf die CKS^{®}-Verschleißschutzschicht jedoch zunächst eine galvanische Zwischenschicht aufgebracht werden.

Die Einlauf- und Verschleißeigenschaften von bekannten Kolbenringen mit einer auf Chrom basierenden Verschleißschutzschicht und einer darauf aufgebrachten Einlaufschicht bedürfen allerdings noch der Verbesserung.

Kolbenringe sind aus den Dokumenten WO98/19084 A, US-4592964-A und US-4612256-A bekannt.

Die vorliegende Erfindung hat die Aufgabe, einen Kolbenring mit verbessertem Einlauf- und Verschleißverhalten sowie ein Verfahren zu dessen Herstellung bereitzustellen.

Gemäß einer ersten Ausführungsform der Erfindung wird ein Kolbenring bereitgestellt, umfassend:
- einen Ringkörper;
- eine auf der Lauffläche des Ringkörpers durch thermisches Spritzen aufgebrachte Haftvermittlerschicht aus einer Ni-Legierung;
- eine auf der Haftvermittlerschicht durch thermisches Spritzen aufgebrachte Verschleißschutzschicht aus einer Mo-Legierung mit CrC, WC oder MoC; und
- eine auf der Verschleißschutzschicht durch thermisches Spritzen aufgebrachte Einlaufschicht aus einer AlCu- Legierung oder Ni-Graphit-Legierung.

Der erfindungsgemäße Kolbenring stellt durch die Verwendung der drei unterschiedlichen Funktions-Schichten eine neue und vorteilhafte Kombination aus Verschleißfestigkeit (durch die Verschleißschutzschicht), günstigen Einlaufeigenschaften (durch die Einlaufschicht) sowie eine erhöhte Adhäsion/Kohäsion (durch die Haftvermittlerschicht) bereit. Die Einlaufschicht muss nicht nachbearbeitet werden, sondern erhält ihre endgültige Form durch den in der Einlaufphase erfolgenden Abrieb. Die Verschleißschutzschicht verhindert übermäßigen Verschleiß unter extremen Betriebsbedingungen des Motors. Die Haftvermittlerschicht sorgt für einen optimalen Halt der Schichten auf dem Träger bzw. Ringkörper.

Bevorzugt sind die Haftvermittlerschicht, die Verschleißschutzschicht und die Einlaufschicht in überspritzter Form aufgebracht.

Bevorzugt weist der Ringkörper Gasentlastungsschlitze auf, die an ihren Kanten eine Fase aufweisen.

Bevorzugt weist die Fase einen Winkel von 30° bis 70° auf. Weiterhin bevorzugt weist die Fase eine Breite von 0,5 bis 2,0 mm auf.

Gemäß einem weiteren Aspekt der Erfindung wird ein Verfahren zur Herstellung eines Kolbenrings gemäß der ersten Ausführungsform der Erfindung bereitgestellt, umfassend:
- Bereitstellen eines Ringkörpers;
- thermisches Aufspritzen einer Haftvermittlerschicht aus einer Ni-Legierung auf die Lauffläche des Ringkörpers;
- thermisches Aufspritzen einer Verschleißschutzschicht aus einer Mo-Legierung mit CrC, WC oder MoC auf die Haftvermittlerschicht; und
- thermisches Aufspritzen einer Einlaufschicht aus einer AlCu- Legierung oder Ni-Graphit-Legierung auf die Verschleißschutzschicht.

Bevorzugt werden die Haftvermittlerschicht, die Verschleißschutzschicht und die Einlaufschicht in überspritzter Form aufgebracht.

Bevorzugt schließt das thermische Aufspritzen die folgenden Beschichtungsverfahren ein:
- ein Lichtbogendraht-Beschichtungsverfahren;
- ein Flamm-Beschichtungsverfahren;
- atmosphärisches Plasmaspritzen, APS; und
- Hochgeschwindigkeits-Flammspritzen, HOVF.

Bevorzugt umfasst das Verfahren weiter:
- Versehen der Flanke des Ringkörpers mit einer Fase an ihren Kanten, vor dem Aufspritzen der Haftvermittlerschicht.

Wenn der Ringkörper Gasentlastungsschlitze aufweist, umfasst das Verfahren bevorzugt weiter:
- Versehen der Gasentlastungsschlitze mit einer Fase an ihren Kanten, vor dem Aufspritzen der Haftvermittlerschicht.

Bevorzugt weist die Fase einen Winkel von 30° bis 70° auf. Weiterhin bevorzugt weist die Fase eine Breite von 0,5 bis 2,0 mm auf.
Fig. 1 zeigt den Schritt den Abfasens des Kolbenrings;
Fig. 2 zeigt schematisch Winkel und Breite der Fase;
Fig. 3 zeigt den Schritt des Aufspritzens der Haftvermittlerschicht; und
Fig. 4 zeigt den vollständig beschichteten Kolbenring gemäß der Erfindung.

Beschichtungen auf den Laufflächen von Kolbenringen müssen außer einer guten und temperaturfesten Haftung (Adhäsion) am Träger und einer guten und temperaturfesten Bindung innerhalb der Schicht (Kohäsion) auch in dem mit der Zylinderwand in Berührung stehenden Oberflächenbereich verschleißfest sein. Darüber hinaus soll ihr Eigenverschleiß in der Einlaufphase für eine genügende Anpassung an die Gegenfläche ausreichen. Darüber hinaus sollen diese Schichten eine hohe Ausbruchsicherheit haben und auch nach langen Laufzeiten kein oder nur ein geringes Ermüdungsverhalten zeigen.

Der vorliegenden Erfindung liegt daher die Aufgabe zugrunde, die Laufflächen von Kolbenringen mit durch ein Flammspritzverfahren aufgetragenen verschleißfesten Schichten zu versehen, die extremen Belastungen standhalten können, dabei aber ein gutes Einlaufverhalten zeigen. Das Verfahren der Herstellung der Schichten soll möglichst einfach und Kosten sparend sein, und vor allem soll es ermöglichen, die verschleißfesten Beschichtungen mit auf den jeweiligen Anwendungsfall abgestimmten Eigenschaften herzustellen.

Erfingdungsgemäß wird diese Aufgabe in einer ersten Ausführungsform durch eine Beschichtung gelöst, welche aus mindestens drei übereinander liegenden unterschiedlichen Spritzschichten besteht: einer Haftvermittlerschicht, einer darüber liegenden Verschleißschutzschicht, und einer äußeren Einlaufschicht. Durch entsprechende Abfasung von Kanten an Ringflanke und Gasentlastungsschlitzen vor der Beschichtung können Adhäsion und Kohäsion weiter verbessert werden.

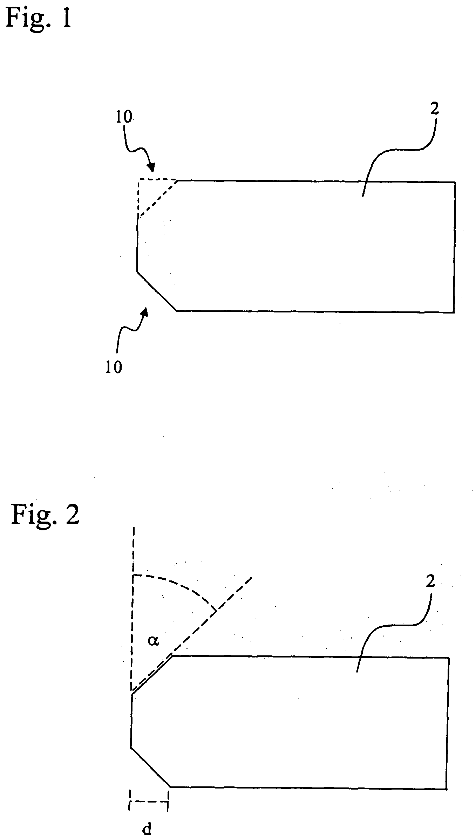

In Fig. 1 ist in einer Querschnittsansicht gezeigt, wie der Kolbenring abgefast wird. Auf der Laufflächen-Seite (in der Figur links) können gemäß der Erfindung vor der Beschichtung die Kanten des Kolbenrings 2 mit einer Fase 10 versehen werden. Der Winkel α der Fase 10 kann gemäß der Erfindung zwischen 30° und 70° liegen, wobei in Fig. 2 beispielhaft ein Winkel von 45° gezeigt ist. Weiterhin kann die Fase 10 gemäß verschiedener Ausführungsformen der Erfindung eine Breite d von 0,5 bis zu 2 mm aufweisen. Das Abfasen von Kanten ist ein optionaler Schritt bei der Herstellung des Kolbenrings bzw. die Fase ist ein optionales Merkmal beim fertigen Kolbenring gemäß der Erfindung. Das Abfasen kann mit jedem geeigneten bekannten Verfahren ausgeführt werden.

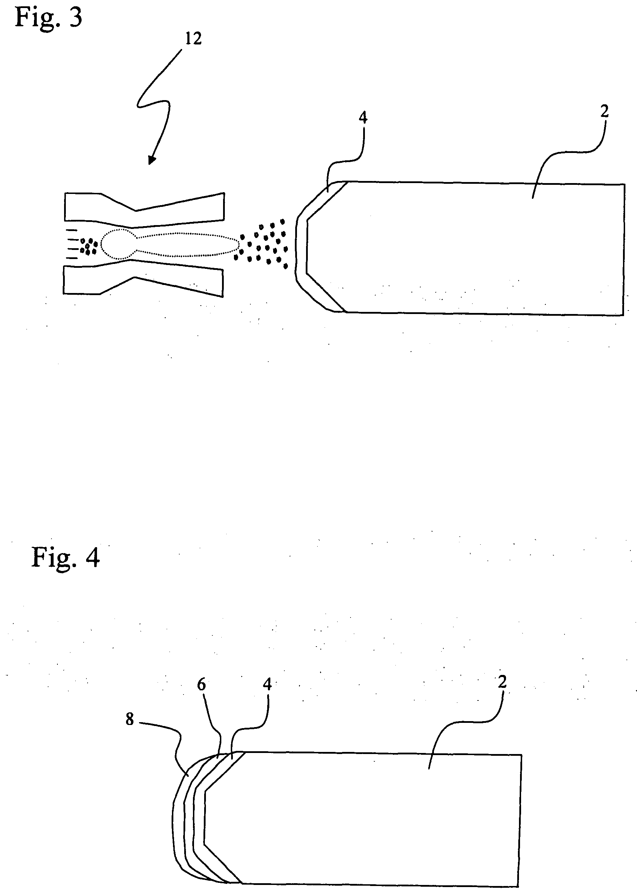

Fig. 3 zeigt in einer Querschnittsansicht den Schritt des Aufbringens der ersten Lage der Beschichtung. Auf den Ringkörper 2 wird eine Haftvermittlerschicht 4 aufgebracht. Dies geschieht gemäß der Erfindung mittels einem thermischen Spritzverfahren, einschließlich Hochgeschwindigkeits-Flammspritzen (High Velocity Oxy-Fuel, HVOF), atmosphärisches Plasmaspritzen (APS), Lichtbogendraht- oder Drahtflammbeschichtungsverfahren.

Beispielhaft ist dies durch eine HVOF-Einrichtung 12 dargestellt. Die Haftvermittlerschicht 4 ist eine Nickel-Legierung.

In weiteren Schritten (nicht in den Figuren gezeigt) werden dann eine Verschleißschutzschicht sowie eine Einlaufschicht über der Haftvermittlerschicht aufgebracht. Dies kann ebenso wie das Aufbringen der Haftvermittlerschicht durch eines der vorstehend genannten thermischen Spritzverfahren erfolgen, wobei auch verschiedene Verfahren für jeweils verschiedene Schichten zum Einsatz kommen können. Das Schichtdesign ist FF, das heißt überspritzt.

Die Verschleißschutzschicht ist gemäß der ersten Ausführungsform der Erfindung eine Molybdän-Legierung mit Chromkarbid CrC, Wolframkarbid WC oder Molybdänkarbid MoC.

Die zuletzt aufgebrachte Einlaufschicht wird an deren Oberfläche nicht nachbearbeitet, sondern erhält ihre endgültige Form während der Einlaufphase des Motors durch Abrieb.

In Fig. 4 ist der fertige Kolbenring gemäß der ersten Ausführungsform der Erfindung in einer Querschnittsansicht dargestellt, umfassend den Ringkörper 2, die Haftvermittlerschicht 4, die Verschleißschutzschicht 6 und die Einlaufschicht 8.

## Patentansprüche

1. Kolbenring, umfassend:
- einen Ringkörper (2);
- eine auf der Lauffläche des Ringkörpers (2) durch thermisches Spritzen aufgebrachte Haftvermittlerschicht (4) aus einer Ni-Legierung;
- eine auf der Haftvermittlerschicht (4) durch thermisches Spritzen aufgebrachte Verschleißschutzschicht (6) aus einer Mo-Legierung mit Chromkarbid, Wolframkarbid oder Molybdänkarbid; und
- eine auf der Verschleißschutzschicht (6) durch thermisches Spritzen aufgebrachte Einlaufschicht (8) aus einer AlCu-Legierung oder Ni-Graphit-Legierung.

2. Kolbenring nach Anspruch 1, wobei die Verschleißschutzschicht eine Mo-Legierung mit Chromkarbid umfasst.

3. Kolbenring nach Anspruch 1 oder 2, wobei die Einlaufschicht eine AlCu-Legierung umfasst.

4. Kolbenring nach einem der vorhergehenden Ansprüche, wobei die Haftvermittlerschicht (4), die Verschleißschutzschicht (6) und die Einlaufschicht (8) in überspritzter Form aufgebracht sind.

5. Kolbenring nach einem der vorhergehenden Ansprüche, wobei die Flanke des Ringkörpers an ihren Kanten eine Fase aufweist, wobei die Fase vorzugsweise einen Winkel von 30° bis 70° und/oder eine Breite von 0,5 bis 2,0 mm aufweist.

6. Kolbenring nach einem der vorhergehenden Ansprüche, wobei der Ringkörper Gasentlastungsschlitze aufweist, die an ihren Kanten eine Fase aufweisen, wobei die Fase vorzugsweise einen Winkel von 30° bis 70° und/oder eine Breite von 0,5 bis 2,0 mm aufweist.

7. Kolbenring nach einem der vorhergehenden Ansprüche, wobei der Kolbenring ein Großkolbenring ist.

8. Verfahren zur Herstellung eines Kolbenrings, umfassend:
- Bereitstellen eines Ringkörpers;
- thermisches Aufspritzen einer Haftvermittlerschicht aus einer Ni-Legierung auf die Lauffläche des Ringkörpers;
- thermisches Aufspritzen einer Verschleißschutzschicht aus einer Mo-Legierung mit Chromkarbid, Wolframkarbid oder Molybdänkarbid auf die Haftvermittlerschicht; und
- thermisches Aufspritzen einer Einlaufschicht auf die Verschleißschutzschicht aus einer AlCu-Legierung oder Ni-Graphit-Legierung.

9. Verfahren nach Anspruch 8, wobei die Verschleißschutzschicht eine Mo-Legierung mit Chromkarbid umfasst.

10. Verfahren nach Anspruch 8 oder 9, wobei die Einlaufschicht eine AlCu-Legierung umfasst.

11. Verfahren nach einem der Ansprüche 8 bis 10, wobei die Haftvermittlerschicht, die Verschleißschutzschicht und die Einlaufschicht in überspritzter Form aufgebracht werden.

12. Verfahren nach einem der Ansprüche 8 bis 11, wobei das thermische Aufspritzen einschließt:
- ein Lichtbogendraht-Beschichtungsverfahren;
- ein Drahtflamm-Beschichtungsverfahren;
- atmosphärisches Plasmaspritzen, APS; und
- Hochgeschwindigkeits-Flammspritzen, HOVF.

13. Verfahren nach einem der Ansprüche 8 bis 12, weiter umfassend:
- Versehen der Flanke des Ringkörpers mit einer Fase an ihren Kanten, vor dem Aufspritzen der Haftvermittlerschicht, wobei die Fase vorzugsweise einen Winkel von 30° bis 70° und/oder Fase eine Breite von 0,5 bis 2,0 mm aufweist.

14. Verfahren nach einem der Ansprüche 8 bis 13, wobei der Ringkörper Gasentlastungsschlitze aufweist, weiter umfassend:
- Versehen der Gasentlastungsschlitze mit einer Fase an ihren Kanten, vor dem Aufspritzen der Haftvermittlerschicht, wobei die Fase vorzugsweise einen Winkel von 30° bis 70° und/oder eine Breite von 0,5 bis 2,0 mm aufweist.

## Claims

1. A piston ring, comprising:
- a ring body (2);
- an adhesive promoter layer (4) of a Ni-alloy applied to the bearing surface of the ring body (2) by thermal spraying;
- a wear-resistant coating (6) of a Mo-alloy with chrome carbide, wolfram carbide or molybdenum carbide applied to the adhesive promoter layer (4) by thermal spraying; and
- a running-in layer (8) of an AlCu-alloy or a Ni graphite-alloy applied to the wear-resistant coating (6) by thermal spraying.

2. The piston ring of claim 1, wherein the wear-resistant coating comprises a Mo-alloy with chrome carbide.

3. The piston ring of claim 1 or 2, wherein the running-in layer comprises an AlCu-alloy.

4. The piston ring of any of the preceding claims, wherein the adhesive promoter layer (4), the wear-resistant coating (6) and the running-in layer (8) are applied in oversprayed form.

5. The piston ring of any of the preceding claims, wherein the flank of the ring body has a bevel at its edges, wherein the bevel has an angle of 30° to 70° and/or a width of 0.5 to 2.0 mm.

6. The piston ring of any of the preceding claims, wherein the ring body has gas discharge slots having a bevel at their edges, wherein the bevel has an angle of 30° to 70° and/or a width of 0.5 to 2.0 mm.

7. The piston ring of any of the preceding claims, wherein the piston ring is a large bore piston ring.

8. A method for the production of a piston ring, comprising:
- providing a ring body;
- thermal spraying of an adhesive promoter layer of an Ni-alloy on the bearing surface of the ring body;
- thermal spraying of a wear-resistant coating of a Mo-alloy with chrome carbide, wolfram carbide or molybdenum carbide on the adhesive promoter layer; and
- thermal spraying of a running-in layer of an AlCu-alloy or Ni graphite-alloy on the wear-resistant coating.

9. The method of claim 8, wherein the wear-resistant coating comprises a Mo-alloy with chrome carbide.

10. The method of claim 8 or 9, wherein the running-in layer comprises an AlCu-alloy.

11. The method of any of the claims 8 to 10, wherein the adhesive promoter layer, the wear-resistant coating and the running-in layer are applied in oversprayed form.

12. The method of any of the claims 8 to 11, wherein the thermal spraying includes:
- an arc wire coating method;
- a wire flame coating method;
- atmospheric plasma spraying, APS; and
- high velocity oxy-fuel flame spraying, HOVF.

13. The method of any of the claims 8 to 12, further comprising:
- providing the flank of the ring body with a bevel at its edges, prior to spraying of the adhesive promoter layer, wherein the bevel has an angle of 30° to 70° and/or a width of 0.5 to 2.0 mm.

14. The method of any of the claims 8 to 13, wherein the ring body has gas discharge slots, further comprising:
- providing the gas discharge slots with a bevel at their edges, prior to spraying of the adhesive promoter layer, wherein the bevel has an angle of 30° to 70° and/or a width of 0.5 to 2.0 mm.

## Revendications

1. Segment de piston, comprenant :
- un corps de segment (2) ;
- une couche de promoteur d'adhérence (4) constituée d'un alliage de Ni appliquée par projection thermique sur la surface de roulement du corps de segment (2),
- une couche de protection contre l'usure (6) constituée d'un alliage de Mo avec du carbure de chrome, carbure de wolfram ou carbure de molybdène appliquée par projection thermique sur la couche de promoteur d'adhérence (4) ; et
- une couche de rodage (8) constituée d'un alliage AlCu ou d'un alliage Ni-graphite appliquée par projection thermique sur la couche de protection contre l'usure (6).

2. Segment de piston selon la revendication 1, dans lequel la couche de protection contre l'usure comprend un alliage de Mo avec du carbure de chrome.

3. Segment de piston selon la revendication 1 ou 2, dans lequel la couche de rodage comprend un alliage AlCu.

4. Segment de piston selon une des revendications précédentes, dans lequel la couche de promoteur d'adhérence (4), la couche de protection contre l'usure (6) et la couche de rodage (8) sont appliquées sous forme surmoulée.

5. Segment de piston selon une des revendications précédentes, dans lequel les flancs du corps de segment présentent sur les arêtes un chanfrein, dans lequel le chanfrein présente de préférence un angle de 30° à 70° et/ou une largeur de 0,5 à 2,0 mm.

6. Segment de piston selon une des revendications précédentes, dans lequel le corps de segment présente une fente de décharge de gaz, qui présente sur ses arêtes un chanfrein, dans lequel le chanfrein présente de préférence un angle de 30° à 70° et/ou une margeur de 0,5 à 2,0 mm.

7. Segment de piston selon une des revendications précédentes, dans lequel le segment de piston est un segment de grand piston.

8. Procédé de fabrication d'un segment de piston, comprenant de :
- fournir un corps de segment ;
- projeter thermiquement une couche de promoteur d'adhérence constituée d'un alliage de Ni sur la surface de roulement du segment de piston ;
- projeter thermiquement une couche de protection contre l'sure constituée d'un alliage de Mo avec du carbure de chrome, carbure de wolfram ou carbure de molybdène sur la couche de promoteur d'adhérence ; et
- projeter thermiquement une couche de rodage sur la couche de protection contre l'usure constituée d'un alliage AlCu ou d'un alliage Ni-graphite.

9. Procédé selon la revendication 8, dans lequel la couche de protection contre l'usure comprend un alliage de Mo avec carbure de chrome.

10. Procédé selon la revendication 8 ou 9, dans lequel la couche de rodage comprend un alliage AlCu.

11. Procédé selon une des revendications 8 à 10, dans lequel la couche de promoteur d'adhérence, la couche de protection contre l'usure et la couche de rodage sont appliquées sous forme surmoulée.

12. Procédé selon une des revendication 8 à 11, dans lequel la projection thermique inclut :
- un procédé de revêtement par fi à l'arc électrique ;
- un procédé de revêtement par fil via flamme ;
- un procédé de projection plasma atmosphérique ; et
- une projection à la flamme à haute vitesse, HOVF.

13. Procédé selon une des revendications 8 à 12, comprenant en outre de :
- pourvoir les flancs du corps de segment d'un chanfrein sur ses bords, avant la pulvérisation de la couche de promoteur d'adhérence, dans lequel le chanfrein présente de préférence un angle de 30° à 70° et/ou une largeur de 0,5 à 2,0 mm.

14. Procédé selon une des revendications 8 à 13, dans lequel le corps de segment présente une fente de décharge de gaz, comprenant en outre de :
- pourvoir la fente de décharge de gaz d'un chanfrein sur ses bords, avant la pulvérisation de la couche de promoteur d'adhérence, dans lequel le chanfrein présente de préférence un angle de 30° à 70° et/ou une largeur de 0,5 à 2,0 mm.
